# EUROPÄISCHE PATENTSCHRIFT

(11) **EP 0 986 453 B1**
(45) Veröffentlichungstag und Bekanntmachung des Hinweises auf die Patenterteilung: **22.05.2002**
(21) Anmeldenummer: 98921389.7
(22) Anmeldetag: 06.03.1998
(51) Int. Cl.: B26D 1/00, B26D 7/26, B23P 15/40

(54) **MESSERTROMMEL FÜR MASCHINEN ZUM QUERSCHNEIDEN VON MATERIALBAHNEN**
KNIFE DRUM FOR MACHINES FOR CROSS-CUTTING LINES OF MATERIAL
TAMBOUR A LAMES POUR COUPES TRANSVERSALES DE BANDES DE MATERIAU

(30) Priorität: 05.06.1997 DE 19723513
(43) Veröffentlichungstag der Anmeldung: 22.03.2000
(73) Patentinhaber: Jagenberg Papiertechnik GmbH, 41468 Neuss (DE)
(72) Erfinder: BLUME, Albrecht, D-40489 Düsseldorf (DE)
(74) Vertreter: Thul, Hermann, Dipl.-Phys.
(86) Internationale Anmeldenummer: EP9801321
(87) Internationale Veröffentlichungsnummer: WO9855276

(56) Entgegenhaltungen:
- EP-A- 0 630 724
- DE-A- 3 531 786
- DE-A- 3 831 393
- DE-A- 4 223 566
- DE-U- 9 204 618
- US-A- 4 005 627
- PATENT ABSTRACTS OF JAPAN vol. 011, no. 018 (C-398), 17. Januar 1987 & JP 61 194197 A (MITSUBISHI RAYON CO LTD), 28. August 1986

## Beschreibung

### Technisches Gebiet

Die Erfindung betrifft eine Messertrommel für Maschinen zum Querschneiden von Materialbahnen, insbesondere Papier- oder Kartonbahnen, gemäß dem Oberbegriff des Patentanspruchs 1.

Querschneidemaschinen zur Herstellung von Bögen aus Papier oder Karton enthalten bekannterweise zwei in einem Maschinengestell übereinander rotierbar gelagerte Messertrommein, deren Messer beim Umlauf paarweise in Schnitteingriff gelangen, um die durchlaufende Bahn mit einem Scherenschnitt quer durchzuschneiden. Damit Papier- oder Kartonbahnen großer Breite mit hoher Produktionsgeschwindigkeit und hoher Schnittqualität geschnitten werden können, müssen die Messertrommeln vielfältige Anforderungen erfüllen:

Bei möglichst geringer Massenträgheit ist eine hohe Biege- und Torsionssteifigkeit erforderlich. Die Messertrommeln müssen eine möglichst hohe Eigendämpfung aufweisen und gegen mechanische Beschädigung und korrosive Medien unempfindlich sein. Um dickere Papier- oder Kartonbahnen zu schneiden, ist es erforderlich, hohe Schnittkräfte großflächig über das Messer in den Mantel der Messertrommel einzuleiten, ohne daß inakzeptable radiale Verformungen im Bereich der Messerbefestigungen auftreten.

### Stand der Technik

Aus der DE-PS 43 21 163 ist eine gattungsgemäße Messertrommel mit einem zylindrischen Walzenkörper bekannt, der aus einem Kunststoffrohr besteht, das aus durch Kohlestoffasern verstärktem Epoxydharz gefertigt ist. Auf dem Kunststoffrohr ist ein Messerhalter aus Metall befestigt. Die Kohlenstoffasern sind nach Art eines kontinuierlich durchgehenden Schraubenganges in den Mantel des Kunststoffrohres eingebettet. In Umfangsrichtung zwischen den Messerhaltern sind mit Kohlenstoffasern verstärkte Kunststoffsegmente angeordnet, wobei sich deren Kohlenstoffasern im wesentlichen parallel zur Rotationsachse des Kunststoffrohres erstrecken.

### Darstellung der Erfindung

Der Erfindung liegt die Aufgabe zugrunde, eine Messertrommel zu schaffen, die bezogen auf ihr Volumen eine verbesserte Biege- und Torsionssteifigkeit aufweist.

Diese Aufgabe wird mit den Merkmalen des Patentanspruchs 1 gelöst.

Die Messertrommel nach der Erfindung enthält zwei getrennte Lagen, von denen die innere Lage im wesentlichen die Torsionssteifigkeit, die äußere Lage im wesentlichen die Biegesteifigkeit bestimmt. Beide Lagen sind aus Faserverbundmaterial gefertigt, dessen Fasern durch Wickeln in den Verbund eingelegt sind.

Die Unteransprüche enthalten bevorzugte, da besonders vorteilhafte Ausgestaltungen der Erfindung.

### Kurze Beschreibung der Zeichnung

Die Zeichnung dient zur Erläuterung der Erfindung anhand eines vereinfacht dargestellten Ausführungsbeispiels.
- Figur 1: zeigt schematisch einen Schnitt quer zur Bahnlaufrichtung durch eine Querschneidemaschine.
- Figur 2: zeigt einen Querschnitt durch eine Messertrommel.
- Figur 3: zeigt in einem Querschnitt die relative Anordnung der Obermessertrommel zur Untermessertrommel und die Befestigung der Messer.

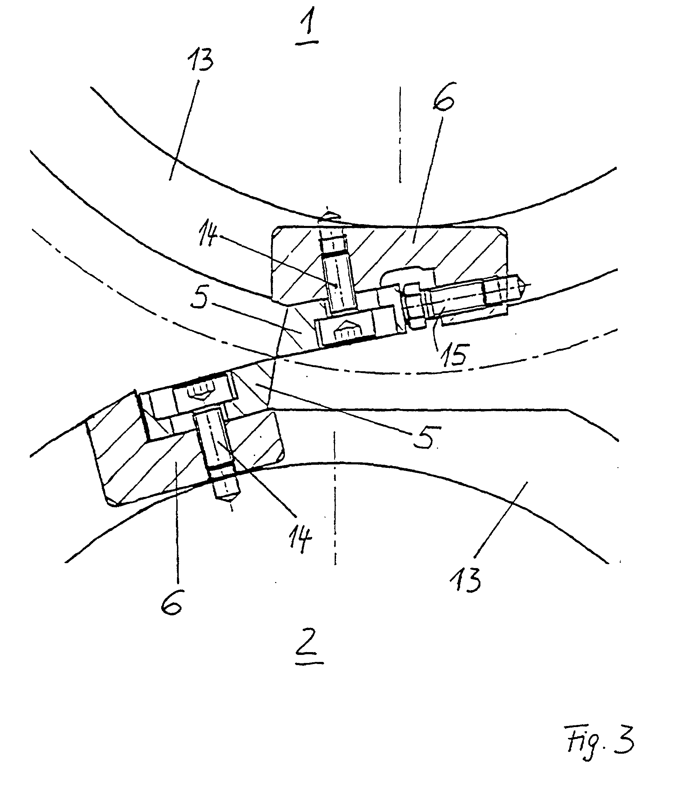

- Die Figuren 3 bis 8: zeigen weitere Ausführungsformen einer Messertrommel nach der Erfindung.

### Wege zur Ausführung der Erfindung

Die Querschneidemaschine enthält zwei Messertrommeln 1, 2, die an ihren axialen Enden in Seitenteilen 3, 4 des Maschinengestells drehbar gelagert sind. Die beiden Messertrommeln 1, 2 sind übereinander mit waagerechter Rotationsachse angeordnet und tragen jeweils zumindest ein sich über die Trommellänge erstreckendes Messer 5, das in einem Halter 6 festgeklemmt ist. Der Halter 6 ist auf der äußeren Mantelfläche in einer Nut 7 befestigt, die in einer Schraubenlinie verläuft. Jedes Messer 5 ist in seiner Nut 7 entsprechend gekrümmt eingespannt, damit die Bahn beim Durchlauf rechtwinklig geschnitten werden kann. Damit die beiden Messertrommeln 1, 2 synchron drehen, sind jeweils an den Enden ihrer durch die Lager reichenden Lagerzapfen 8 Synchronisationsstirnräder 9, 10 befestigt.

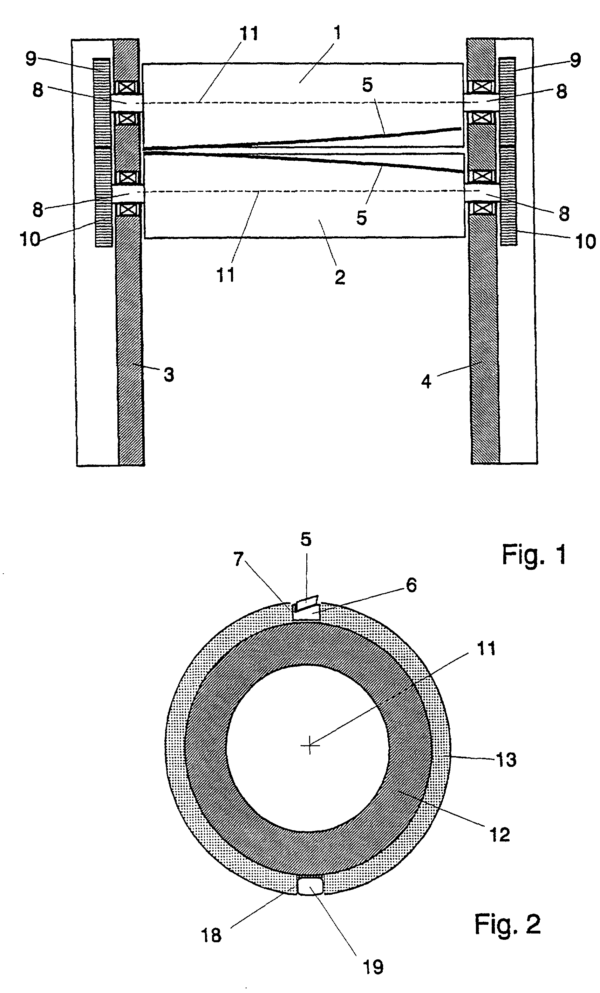

Die beiden Messertrommeln (Obermessertrommel 1, Untermessertrommel 2) sind in den für die Erfindung relevanten Merkmalen gleich aufgebaut und mit der gleichen Anzahl von Messern 5 bestückt. Der Aufbau von verschiedenen Ausführungsformen ist in den Figuren 2 bis 8 detaillierter dargestellt:

Jede Messertrommel 1, 2 besteht aus einem walzenförmigen Tragkörper, an dessen Stirnseiten die Lagerzapfen 8 für die Lagerung im Maschinengestell koaxial zur Roationsachse 11 befestigt sind. Der Tragkörper baut sich aus zwei rohrförmigen, konzentrisch übereinandergeordneten Schalen 12, 13 auf, die aus einem Faserverbundmaterial, bevorzugt einem Verbundmaterial aus Kohlefasern und Harz (CFK-Faserverbund) hergestellt sind. Die Innenschale 12 ist so ausgelegt, daß sie die geforderte Torsionssteifigkeit gewährleistet. Dazu sind die Kohlefasern der Innenschale 12 kreuzweise sowohl in einem positiven als auch in einem negativen Winkel von 30° bis 60°, vorzugsweise von 45°, zur Rotationsachse 11 des Tragkörpers gewickelt.

Die Außenschale 13 ist so aufgebaut, daß sie die geforderte Biegesteifigkeit gewährleistet. Dazu sind die Kohlefasern in der Außenschale in einem positiven und/oder negativen Winkel von weniger als 30°, vorzugsweise von weniger als 10°, im Beispiel 5° bis 8°, zur Rotationsachse 11 gewickelt. Mit diesen, für die Biegesteifigkeit vorteilhaften geringen Winkeln sind die Kohlefasern durch Aufwickeln schichtweise übereinander gelegt. Die Wicklung der Kohlefasern der Innenschale 12 erfolgt bevorzugt ebenfalls kreuzweise, d. h. sie sind sowohl in den positiven als auch in den negativen geringen Winkeln gewickelt. Bei sehr geringen Winkeln nahe 0° ist es ebenfalls möglich, nur in eine Richtung zu Wickeln.

Die Wandstärke der Innenschale 12 ist zumindest so groß wie die Wandstärke der Außenschale 13, bevorzugt beträgt sie das 1,1-fache bis 3-fache der Wandstärke der Außenschale 13. Falls die Fasern der Innenschale 12 das gleiche Elastizitätsmodul haben wie die Fasern der Außenschale 13 ist es vorteilhaft, die Innenschale 12 etwa doppelt so dick wie die Außenschale 13 zu gestalten. Im Ausführungsbeispiel hat die Innenschale 12 bei einem Innendurchmesser von 110 mm eine Wandstärke von 40 mm, die Außenschale 13 eine Wandstärke von 20 mm.

In die Mantelfläche der Außenschale 13 ist zumindest eine Nut 7 durch ein abtragendes Verfahren, insbesondere durch Fräsen, eingearbeitet, die sich in einer Schraubenlinie verlaufend über die Trommellänge erstreckt. Die Tiefe der Nuten 7 ist so gewählt, daß sich jede Nut 7 ausschließlich in der Außenschale 13 befindet, aus der Innenschale 12 somit beim Fräsen der Nuten 7 kein Material abgetragen wird. Zumindest in einer Nut 7 ist ein entsprechend dem Verlauf der Nut 7 schraubenlinienförmig gekrümmter Messerhalter 6 aus Metall, bevorzugt aus Stahl, befestigt, der Elemente zum Festklemmen eines Messers 5 und zum Ausrichten der Schneidkante aufweist. Die Befestigung der Messer 5 an der Obermessertrommel 1 und der Untermessertrommel 2 sind in Figur 3 detaillierter dargestellt:

Der Messerhalter 6 ist in die Nut 7 der Außenschale 13 eingeklebt. Er weist eine ebene, in einem flachen positiven Winkel gegen die Tangente an den Tragkörper geneigt verlaufende Oberfläche auf, die als Abstützfläche für das Messer 5 dient. Das Messer 5 ist mit radial überstehender Schneidkante auf dem Halter 6 mittels Befestigungsschrauben 14 festgeschraubt, die in axialer Richtung etwa alle 50 mm angeordnet sind. Bei der Obermessertrommel 1 sind zusätzlich etwa alle 50 mm über die Trommellänge Einstellschrauben 15 in dem Messerhalter 6 gelagert, die gegen die Hinterkante des Messers 5 drücken. Mittels der Einstellschrauben 15 läßt sich der Verlauf der Schneidkante des Messers 5 exakt justieren.

Bei der Ausführungsform nach Figur 2 wurde in die Mantelfläche der Außenschale 13 der Messertrommel in einem Abstand von etwa 180° zur Messernut 7 eine zweite Nut 18 eingefräst. Die zweite Nut 18 verläuft über den Umfang gemessen in etwa äquidistant zur Messernut 7, also ebenfalls in Form einer Schraubenlinie. In der Nut 18 ist ein Gegengewicht 19 befestigt, das so gestaltet ist, daß der Schwerpunkt der Messertrommel auf der Rotationsachse 11 liegt.

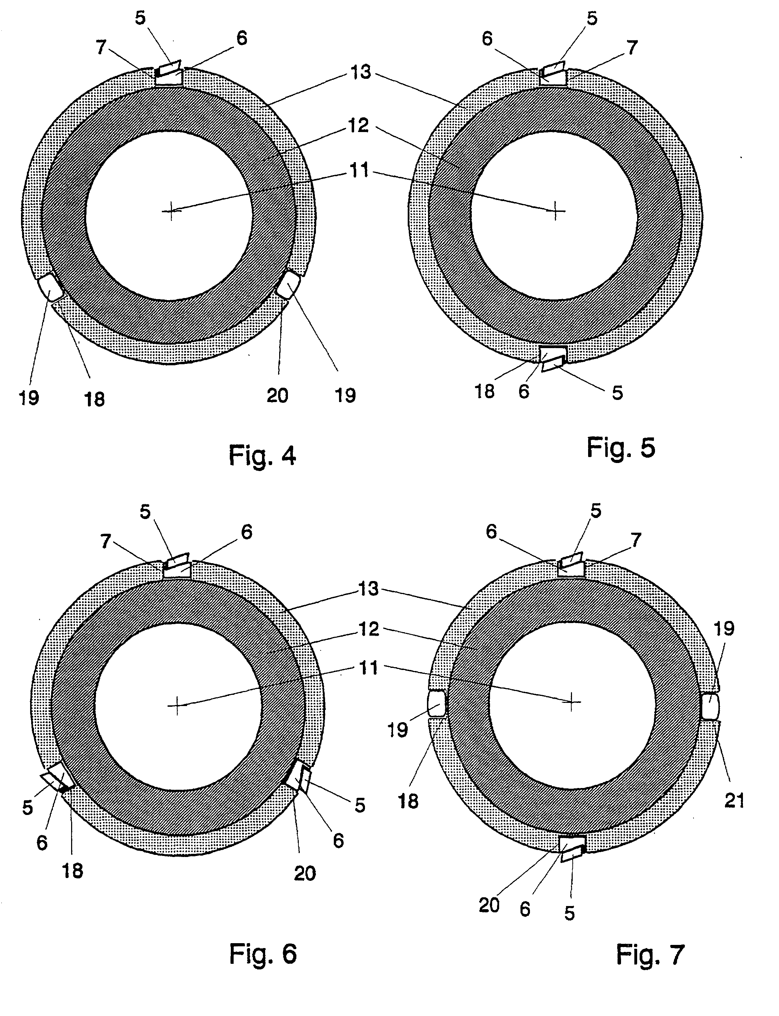

Figur 4 zeigt eine weitere Ausführungsform einer erfindungsgemäßen Messertrommel, bei der in die Mantelfläche der Außenschale 13 drei umfänglich äquidistant verlaufende Nuten 7, 18, 20 in einem Abstand von jeweils etwa 120° eingearbeitet sind. In einer Nut 7 ist ein Messerhalter 6 mit einem Messer 5, in den beiden anderen Nuten 18, 20 ist jeweils ein Gegengewicht 19 befestigt. Die Gegengewichte 19 sind so gestaltet, daß sowohl der Schwerpunkt der Messertrommel in der Rotationsachse 11 verläuft, als auch die beiden Hauptflächenträgheitsmomente im wesentlichen gleich sind. Diese Messertrommel ist besonders für schnell laufende Querschneidemaschinen geeignet.

Die Messertrommeln nach den Figuren 5, 6 und 7 enthalten jeweils mehr als ein Messer 5. Sie sind besonders zum Schneiden von kurzen Formaten ausgelegt, da bei einem Umlauf zweimal (Figur 5, Figur 7) oder dreimal (Figur 6) geschnitten wird.

Bei der Ausführungsform nach Figur 5 sind zwei Nuten 7, 18 in einem Abstand von 180° und umfänglich äquidistant in Schraubenlinienform verlaufend in die Mantelfläche der Außenschale 13 eingearbeitet. In beiden Nuten 7, 18 ist jeweils ein Messerhalter 6 mit einem Messer 5 befestigt.

Figur 6 zeigt eine Ausführungsform mit drei Nuten 7, 18, 20, die in einem Abstand von 120° umfänglich äquidistant verlaufen. In jeder Nut 7, 18, 20 ist ein Messerhalter 6 mit einem Messer 5 befestigt. Da bei einer Umdrehung der Messertrommel dreimal geschnitten wird, läßt sich mit einer derartigen Messertrommel die Schnittrate erheblich steigern.

Die Messertrommel nach Figur 7 enthält vier Nuten 7, 18, 20, 21, wobei in zwei gegenüberliegenden Nuten 7, 20 jeweils ein Messerhalter 6 mit einem Messer 5, in den beiden anderen Nuten 18, 21 in einem Abstand von etwa 90° zu den Messernuten 7, 20 Gegengewichte 19 befestigt sind. Auch diese Messertrommel ist für hohe Schnittraten ausgelegt, da zweimal pro Umlauf geschnitten wird und zugleich mittels der Gegengewichte die Flächenträgheitsmomente umfänglich sehr gleichmäßig verteilt sind.

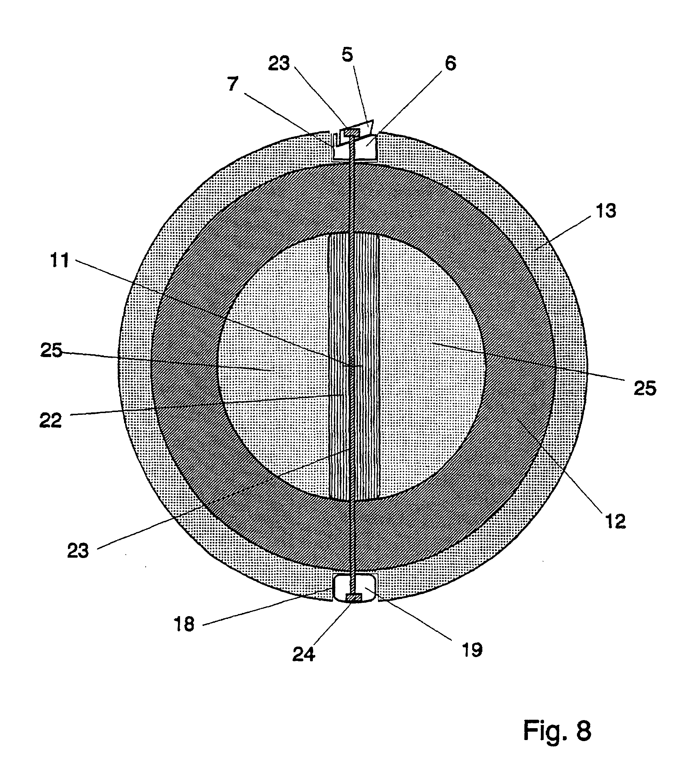

In Figur 8 ist eine Messertrommel dargestellt, die im Inneren der Innenschale 12 ein sich axial über die Trommellänge und radial über den Innenquerschnitt der Innenschale 12 erstreckendes stegförmiges Abstützelement 22 enthält. Das Abstützelement 22 dient dazu, hohe Schnittkräfte aufzunehmen, ohne daß die Messertrommel in radialer Richtung deformiert wird. Das Abstützelement 22 erstreckt sich daher in radialer Richtung zum Messer 5 durch die Rotationsachse 11. Ebenso wie die Ausführungsform nach Figur 2 enthält diese Ausführungsform neben der Messernut 7 eine zweite Nut 18 in einem Abstand von etwa 180°, in der ein Gegengewicht 19 befestigt ist. Das Messer 5 ist mittels einer Reihe von Dehnschrauben 23 in der Nut 7 befestigt, die sich durch die Messertrommel und das Abstützelement 22 bis in entsprechende Gewindebohrungen im Gegengewicht 19 erstrecken. Die unter Spannung stehenden Dehnschrauben 23 verhindern, daß sich aufgrund von Schwingungen im Betrieb das Messer 5, der Messerhalter 6 und/oder das Gegengewicht 19 löst.

Bevorzugt besteht das stegförmige Abstützelement 22 ebenfalls aus Faserverbundmaterial, das durch Umwickeln eines plattenförmigen Wickelkerns mit radial verlaufenden Fasern hergestellt wurde. Die radial verlaufenden Fasern des Abstützelements 22 nehmen die beim Schneiden auf dem Messerhalter 6 wirkenden Druckkräfte auf, ohne daß eine Deformation in radialer Richtung der Messertrommel auftritt.

Die Messertrommel nach Figur 8 kann vorteilhaft so hergestellt werden, daß das Abstützelement 22 Teil des Wickelkerns ist, auf den die Fasern der Innenschale 12 aufgewickelt werden. Dazu wird zunächst das Abstützelement 22 hergestellt und dann mit Segmenten 25 aus einem leichten Material ergänzt, das die für einen Wickelkern erforderliche Steifigkeit und Festigkeit aufweist. Bevorzugt werden die Segmente 25 aus einem geschäumten Kunststoff gefertigt. Sie werden anschließend mit dem Abstützelement 22 zu einem exakt kreiszylinderförmigen Wickelkern bearbeitet. Danach wird die Innenschale 12 wird durch schichtweises Umwickeln mit harzgetränkten Kohlestoffasern erzeugt, wobei die Segmente 25 mit dem Abstützelement 22 nach Art einer verlorenen Schalung in der Innenschale 12 verbleiben. Zum Schluß wird die Außenschale 13 aufgebracht, die Nuten 7, 18 werden in deren Mantelfläche eingefräst, und die durchgehenden Bohrlöcher für die Dehnschrauben 23 werden gebohrt.

## Patentansprüche

1. Messertrommel für eine Maschine zum Querschneiden von Materialbahnen, insbesondere Papier- oder Kartonbahnen, mit einem walzenförmigen Tragkörper aus einem Faserverbundmaterial, auf dessen Mantelfläche zumindest ein Halter (6) für ein sich über die Trommellänge erstreckendes Messer (5) befestigt ist, *wobei der Tragkörper eine innere rohrförmige Schale (12) aus einem Faserverbundmaterial mit schräg zur Rotationsachse (11) kreuzweise gewickelten Fasern aufweist,* **dadurch gekennzeichnet, daß** der Tragkörper aus zwei rohrförmigen, konzentrisch übereinander angeordneten Schalen (12, 13) aus Faserverbundmaterial besteht, wobei
- die Fasern in der Innenschale (12) in einem positiven und negativen Winkel von 30° bis 60°, vorzugsweise von 45°, zur Rotationsachse (11) des Tragkörpers kreuzweise gewickelt sind und
- die Fasern in der Außenschale (13) in einem positiven und/oder negativen Winkel von weniger als 30°, vorzugsweise weniger als 10°, zur Rotationsachse (11) des Tragkörpers gewickelt sind,
und daß in die Mantelfläche der Außenschale (13) durch ein abtragendes Verfahren, insbesondere durch Fräsen, zumindest eine sich über die Trommellänge erstreckende Nut (7) eingearbeitet ist, in der der Messerhalter (6) befestigt ist.

2. Messertrommel nach Anspruch 1, **dadurch gekennzeichnet, daß** die Wandstärke der Innenschale (12) zumindest so groß ist wie die Wandstärke der Außenschale (13).

3. Vorrichtung nach Anspruch 2, **dadurch gekennzeichnet, daß** die Wandstärke der Innenschale (12) das 1,1-fache bis 3-fache der Wandstärke der Außenschale (13) beträgt.

4. Messertrommel nach einem der Ansprüche 1 bis 3, **dadurch gekennzeichnet, daß** in die Mantelfläche der Außenschale (13) zwei Nuten (7, 18) in einem Abstand von etwa 180° eingearbeitet sind, wobei in einer Nut (7) ein Messerhalter (6) mit einem Messer (5), in der anderen Nut (18) ein Gegengewicht (19) oder ein Messerhalter (6) mit einem Messer (5) befestigt ist.

5. Messertrommel nach einem der Ansprüche 1 bis 3, **dadurch gekennzeichnet, daß** in die Mantelfläche der Außenschale (13) drei Nuten (7, 18, 20) jeweils in einem Abstand von etwa 120° eingearbeitet sind, wobei in eine Nut (7) ein Messerhalter (6) mit einem Messer (5), in den beiden anderen Nuten (18, 20) jeweils ein Gegengewicht (19) oder ein Messerhalter (6) mit einem Messer (5) befestigt ist.

6. Messertrommel nach einem der Ansprüche 1 bis 3, **dadurch gekennzeichnet, daß** in die Mantelfläche der Außenschale (13) vier Nuten (7, 18, 20, 21) eingearbeitet sind, wobei in zwei entgegengesetzt angeordneten Nuten (7, 20) jeweils ein Messerhalter (6) mit einem Messer (5), in den beiden anderen Nuten (18, 21) in einem Abstand von etwa 90° zu den Messernuten (7, 20) jeweils ein Gegengewicht (19) befestigt ist.

7. Messertrommel nach einem der Ansprüche 1 bis 6, **dadurch gekennzeichnet, daß** im Innern der Innenschale (12) ein sich axial über die Trommellänge und radial über den Innenquerschnitt der Innenschale (12) erstreckendes stegförmiges Abstützelement (22) angeordnet ist, das in radialer Richtung zum Messer (5) durch die Rotationsachse (11) verläuft.

8. Messertrommel nach Anspruch 7, **dadurch gekennzeichnet, daß** das stegförmige Abstützelement (22) aus Faserverbundmaterial besteht, das durch Umwickeln eines plattenförmiges Wickelkerns mit radial verlaufenden Fasern hergestellt wurde.

9. Messertrommel nach Anspruch 7 oder 8, **dadurch gekennzeichnet, daß** der Messerhalter (6) mittels sich durch das Abstützelement (22) erstreckenden Dehnschrauben (23) in der Nut (7) der Außenschale (13) befestigt ist.

## Claims

1. Knife drum for a machine for cross-cutting material webs, especially paper or board webs, having a roll-like supporting element made of a fibrous composite material, on whose circumferential surface there is fixed at least one holder (6) for a knife (5) that extends over the length of the drum, *the supporting element having an inner tubular shell (12) made of a fibrous composite material with fibres wound crosswise at an angle to the axis of rotation (11),* **characterized in that** the supporting element comprises two tubular shells (12, 13) of fibrous composite material which are arranged concentrically one over the other,
- the fibres in the inner shell (12) being wound crosswise at a positive and negative angle of 30° to 60°, preferably of 45°, to the axis of rotation (11) of the supporting body, and
- the fibres in the outer shell (13) being wound at a positive and/or negative angle of less than 30°, preferably less than 10°, to the axis of rotation (11) of the supporting element,
and **in that** at least one groove (7) which extends over the length of the drum and in which the knife holder (6) is fixed is machined into the circumferential surface of the outer shell (13) by means of a cutting method, in particular by milling.

2. Knife drum according to Claim 1, **characterized in that** the wall thickness of the inner shell (12) is at least as great as the wall thickness of the outer shell (13).

3. Knife drum according to Claim 2, **characterized in that** the wall thickness of the inner shell (12) is 1.1 times to 3 times the wall thickness of the outer shell (13).

4. Knife drum according to one of Claims 1 to 3, **characterized in that** two grooves (7, 18) are machined into the circumferential surface of the outer shell (13) at a distance of about 180°, a knife holder (6) with a knife (5) being fixed in one groove (7), and a counterweight (19) or a knife holder (6) with a knife (5) being fixed in the other groove (18).

5. Knife drum according to one of claims 1 to 3, **characterized in that** three grooves (7, 18, 20) are machined into the circumferential surface of the outer shell (13), in each case at a distance of about 120°, a knife holder (6) with a knife (5) being fixed in one groove (7), and a counterweight (19) or a knife holder (6) with a knife (5) being fixed respectively in the two other grooves (18, 20).

6. Knife drum according to one of Claims 1 to 3, **characterized in that** four grooves (7, 18, 20, 21) are machined into the circumferential surface of the outer shell (13), in each case a knife holder (6) with a knife (5) being fixed in two grooves (7, 20) arranged opposite each other, and in each case a counterweight (19) being fixed in the two other grooves (18, 21) at a distance of about 90° from the knife grooves (7, 20).

7. Knife drum according to one of Claims 1 to 6, **characterized in that** in the interior of the inner shell (12) there is arranged a web-like support element (22) which extends axially over the length of the drum and radially over the internal cross section of the inner shell (12) and which, in the radial direction in relation to the knife (5), runs through the axis of rotation (11).

8. Knife drum according to Claim 7, **characterized in that** the web-like support element (22) consists of fibrous composite material, which has been produced by winding fibres running radially around a plate-like winding core.

9. Knife drum according to Claim 7 or 8, **characterized in that** the knife holder (6) is fixed in the groove (7) in the outer shell (13) by means of expansion bolts (23) extending through the support element (22).

## Revendications

1. Tambour à lames pour une machine de coupe transversale de bandes de matériau, en particulier de bandes de papier ou de carton, avec un corps de support en forme de rouleau en une matière composite fibreuse, sur la surface latérale duquel est fixé au moins un support (6) pour une lame (5) s'étendant sur la longueur du tambour, dans lequel le corps de support présente une coquille intérieure en forme de tube (12) en une matière composite fibreuse avec des fibres enroulées de façon croisée en oblique par rapport à l'axe de rotation (11), **caractérisé en ce que** le corps de support se compose de deux coquilles (12, 13) en forme de tubes, disposées concentriquement l'une à l'autre, en matière composite fibreuse, dans lesquelles
- les fibres dans la coquille intérieure (12) sont enroulées de façon croisée avec un angle positif et négatif de 30° à 60°, de préférence de 45°, par rapport à l'axe de rotation (11) du corps de support, et
- les fibres dans la coquille extérieure (13) sont enroulées avec un angle positif et/ou négatif de moins de 30°, de préférence de moins de 10°, par rapport à l'axe de rotation (11) du corps de support, et **en ce qu'**au moins une rainure (7) s'étendant sur la longueur du tambour, dans laquelle le porte-lame (6) est fixé, est usinée dans la surface latérale de la coquille extérieure (13) par un procédé à enlèvement de copeaux, en particulier par fraisage.

2. Tambour à lames suivant la revendication 1, **caractérisé en ce que** l'épaisseur de paroi de la coquille intérieure (12) est au moins aussi grande que l'épaisseur de paroi de la coquille extérieure (13).

3. Dispositif suivant la revendication 2, **caractérisé en ce que** l'épaisseur de paroi de la coquille intérieure (12) vaut de 1,1 à 3 fois l'épaisseur de paroi de la coquille extérieure (13).

4. Tambour à lames suivant l'une quelconque des revendications 1 à 3, **caractérisé en ce que** deux rainures (7, 18) sont usinées dans la surface latérale de la coquille extérieure (13), à une distance d'environ 180°, un porte-lame (6) .avec une lame (5) étant fixé dans une rainure (7), un contrepoids (19) ou un porte-lame (6) avec une lame (5) étant fixé dans l'autre rainure (18).

5. Tambour à lames suivant l'une quelconque des revendications 1 à 3, **caractérisé en ce que** trois rainures (7, 18, 20) sont usinées dans la surface latérale de la coquille extérieure (13), avec une distance respective d'environ 120°, un porte-lame (6) avec une lame (5) étant fixé dans une rainure (7), un contrepoids (19) ou un porte-lame (6) avec une lame (5) étant fixé dans chacune des deux autres rainures (18, 20).

6. Tambour à lames suivant l'une quelconque des revendications 1 à 3, **caractérisé en ce que** quatre rainures (7, 18, 20, 21) sont usinées dans la surface latérale de la coquille extérieure (13), un porte-lame (6) avec une lame (5) étant fixé dans chacune de deux rainures disposées en opposition (7, 20), un contrepoids (19) étant fixé dans chacune des deux autres rainures (18, 21) à une distance d'environ 90° par rapport aux rainures garnies de lames (7, 20).

7. Tambour à lames suivant l'une quelconque des revendications 1 à 6, **caractérisé en ce qu'**un élément de soutien (22) en forme de nervure, qui s'étend en direction axiale sur la longueur du tambour et en direction radiale sur la section intérieure de la coquille intérieure (12), est disposé à l'intérieur de la coquille intérieure (12) et est orienté en direction radiale vers la lame (5) en passant par l'axe de rotation (11).

8. Tambour à lames suivant la revendication 7, **caractérisé en ce que** l'élément de soutien en forme de nervure (22) se compose d'une matière composite fibreuse, qui a été fabriquée en entourant un noyau de bobinage en forme de plaque avec des fibres bobinées en direction radiale.

9. Tambour à lames suivant la revendication 7 ou 8, **caractérisé en ce que** le porte-lame (6) est fixé dans la rainure (7) de la coquille extérieure (13) au moyen de vis allégées (23) s'étendant à travers l'élément de soutien (22).
